# EUROPEAN PATENT APPLICATION

(11) **EP 4 325 900 A1**
(43) Date of publication of application: **21.02.2024**
(21) Application number: 22190998.9
(22) Date of filing: 18.08.2022
(51) Int. Cl.: H04W 4/02, H04W 4/021, H04W 4/90

(54) **EMERGENCY CALL ROUTING**

(71) Applicant: Vodafone GmbH, 40549 Düsseldorf (DE)
(72) Inventor: Nozulak, Thorsten, 59399 Olfen (DE); Seifert, Ulrich, 40468 Düsseldorf (DE); Kenkel, Christoph, 40476 Düsseldorf (DE)
(74) Representative: Weisbrodt, Bernd

(57) **Abstract**

The present solution provides a method performed in a wireless communication system, the method comprising: determining (S11) a geographic location of a base station (11); identifying (S12), based on the determined geographic location, a local emergency call center (50) that serves an emergency call area comprising the determined geographic location; providing (S13) an information on the identified local emergency call center (50) to at least one network entity.

## Description

The present solution concerns an improved emergency call routing in a wireless communication network, particularly for network components that are not under direct control of a network operator.

Nowadays, network operators and customers strive to introduce so called Pico NodeBs or Micro NodeBs to provide indoor coverage at customer areas, which normally do only have outdoor coverage, e.g. inside a factory building. The implementation of these Pico NodeBs or Micro NodeBs shall be done by the customers themselves.

In this approach, the problem occurs that every NodeB, i.e. also the aforementioned Pico NodeB, in a telecommunication network needs to be configured for emergency call routing due to regulatory reasons. Many countries do not have a central emergency call center but rather a plurality of emergency call centers that are distributed countrywide. Hence, the wireless communication network, for example a PCRF (PCRF: Policy and Charging Rules Function) of a wireless communication network needs to be configured, such that the PCRF knows respectively has information about of/about the responsible emergency call center which has to be contacted in respectively for such emergency call cases. Currently, the configuration of fixed NodeBs, which are within the responsibility area of the network operator, is done manually in advance since the geographic location of the NodeB is known in advance.

In opposite to fixed NodeBs, that can be planned in advance, the location of mobile Pico NodeBs is not known in advance and therefore, a prior mapping to the correct emergency call center is not possible.

Therefore, a solution is required, which allows an automatic configuration of emergency call routing, thereby overcoming the above-mentioned issues.

Addressing this problem, the present disclosure suggests, according to a first embodiment, a method performed by a base station in a wireless communication system, the method comprising: determining a geographic location of the base station; identifying, based on the determined geographic location, a local emergency call center that serves an emergency call area comprising the determined geographic location; and providing an information on the identified local emergency call center to at least one network entity.

Advantageously the method is controlled by a module, which is present in the core network of the wireless communication network. Further features and advantages of the module are explained later below. The base station, e.g. a NodeB, advantageously provides only the necessary parameter to the module.

The advantage of such solution is that a base station, e.g. a Pico NodeB, can initiate an emergency call routing configuration without any manual efforts of the network operator's employees or the customers' employees. Hence, the base station can be independently placed by a customer at an arbitrary location. As part of the connection process of the Pico NodeB also the emergency call routing process is released respectively triggered. However, the routing is advantageously carried out in the network without the Pico NodeB knowing respectively has knowledge about which is the correct emergency call centre.

Advantageously, the determining comprises at least one of: obtaining the location of the base station, advantageously the Pico Node B, using a global navigation satellite system (GNSS) and obtaining the location of the base station, advantageously the Pico Node B, using information from cells of the wireless communication system. Using a GNSS is particularly advantageous since this allows a precise determination of the base station's location. However, in case no GNSS coverage is given, it may be relied upon information from cells of the wireless communication system, e.g. by means of triangulation. The aforementioned ways of obtaining the location may be combined to achieve an even higher precision.

According to a preferred embodiment, the GNSS comprises at least one of: GPS, GLONASS, Galileo and Beidou. It is also possible to combine at least two of the GNSS technologies, for example dependent on the actual coverage and/or signal quality of each respective GNSS technology.

According to another preferred embodiment, information from cells comprises at least one of: cell identification and timing advance. In case that at least three neighboring cells are detected by the base station, the location of the base station may be calculated by using information of such detected cells. However, in case less than three neighboring cells are detected by the base station, the location of the base station may be determined using information of e.g. a single detected (mother) cell only. This may be provided by a fixed NodeB, which provides outdoor coverage for the area that surrounds the area in which the base station provides indoor coverage.

There might be the situation that the base station may neither obtain information on at least one neighboring cell, advantageoulsy two or more neighboring cells nor receives any GNSS signals. The Pico NodeB must detect at least one neighbouring cell, otherwise no connection to the core network can be established. With only one or two neighbouring cells, however, no good localisation can be calculated, but the inventive solution still works advantageously. According to an alternative embodiment, determining the geographic location of the base station comprises in such cases to scan, using e.g. a technician's smartphone, an identifier that is printed onto the base station, such as a QR code. The identifier links to a specific webpage for inputting GNSS information relating to this specific base station. Subsequently, the technician moves with the smartphone to an area close to the base station, which allows to receive GNSS signals. The received GNSS signals are provided to the aforementioned webpage, which subsequently provides the same, e.g. to a self-configuration module being part of an operations and maintenance section in the wireless communication network, in order to allow identifying a local emergency call center that serves an emergency call area comprising the determined geographic location.

According to a preferred aspect, the at least one network entity comprises a Policy and Charging Rules Function (PCRF) and a Proxy Call Session Control Function (P-CSCF). Since such network entities are relevant for emergency call routing, once the information on the identified local emergency call center has been obtained, it should be transmitted to the same to allow a subsequent configuration.

Advantageously, the base station is a Pico NodeB. Since a Pico NodeB is not in the network operator's area of responsibility, the given problem particularly occurs for such type of base station. Of course, the claimed method may also be applied to other base stations, e.g. fixed NodeBs, which are in the network operator's area of responsibility. Hence, a manual configuration effort is decreased.

According to a further preferred embodiment, the identifying further comprises comparing the determined geographic location to a map of emergency call areas and storing the identified local emergency call center, preferably in a mapping table. Advantageously the Pico NodeB does not need the information of the associated emergency call centre. The routing to the correct emergency call centre is advantageously only needed within the core network of the wireless communication network - advantageously only here is routed accordingly. Therefore, the mapping tables are located in the core network of the wireless communication network, preferred in the module which is present in the core network of the wireless communication network and controls the method. Further features and advantages of the module are explained later below. Upon identifying the local emergency call center, this may be stored locally. Advantageously, it may be provided that the base station determines its geographic location on a regular basis in order to allow a comparison of the same to the map of emergency call areas. Hence, if the location of the base station is changed often, an emergency call routing can still be ensured.

According to a second embodiment, the present disclosure provides a module comprising: a transceiver configured to receive a determined geographic location of a base station; and a processor operably coupled with the transceiver and configured to: identify, based on the determined geographic location, a local emergency call center that serves an emergency call area comprising the determined geographic location, and provide an information on the identified local emergency call center to at least one network entity.

Advantageously the module is used for implementation and control of the method. The module is present in the core network of the wireless communication network. The base station, e.g. a NodeB, advantageously provides only the necessary parameter to the module.

Advantageously, the determined geographic location of the base station is based on at least one of: the location of the base station obtained by using a global navigation satellite system (GNSS) and the location of the base station obtained by using information from cells of the wireless communication system.

According to a preferred embodiment, the GNSS comprises at least one of: GPS, GLONASS, Galileo and Beidou.

According to another preferred embodiment, information from cells comprises at least one of: cell identification and timing advance.

According to a preferred aspect, the at least one network entity comprises a Policy and Charging Rules Function (PCRF) and a Proxy Call Session Control Function (P-CSCF).

Advantageously, the base station is a Pico NodeB.

According to a further preferred embodiment, the processor is further configured to identify the local emergency call center by comparing the received determined geographic location to a map of emergency call areas and storing the identified local emergency call center, preferably in a mapping table.

Further details, features and advantages of the presented solution are explained in more detail below with reference to the embodiments shown in the figures of the drawings.

Therein:
- Fig. 1: represents an overview of a wireless communication system, which has been modified in accordance with the claimed solution;
- Fig. 2: represents a diagram showing the method according to the claimed solution; and
- Fig. 3: represents another diagram showing the method according to the claimed solution.

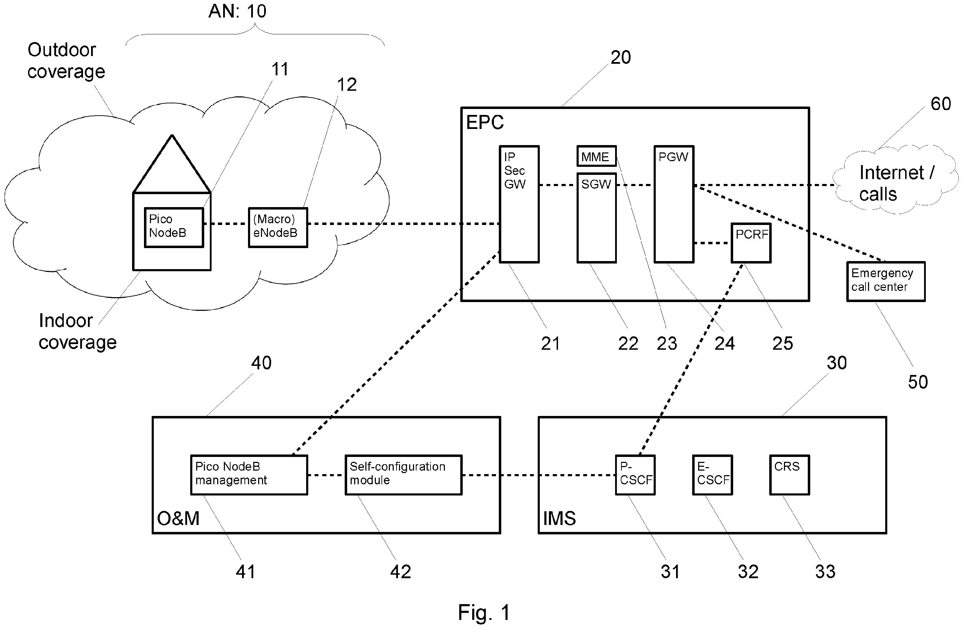

Fig. 1 shows the overall structure of a wireless communication system, which comprises an access network (AN) 10, an Evolved Packet Core (EPC) 20, an IP Multimedia Subsystem (IMS) 30 and an operations and maintenance (O&M) section 40. The embodiment of Fig. 1 is illustrative and only depicts components and connections (represented by dashed lines), which are relevant for the understanding of the claimed solution.

In detail, the AN 10 comprises a first base station 11, which might be a Pico NodeB or a Micro NodeB, and a second base station 12, which might be a Macro eNodeB. The first base station 11 provides indoor coverage inside a building, whereas the second base station 12 provides outdoor coverage in an area outside such building. Contrary to the second base station 12, the first base station 11 is not in the responsibility area of a network operator but rather in the responsibility area of a customer.

In the present case, the first base station 11 may auto-establish an IPSec connection to an IP Sec Gateway (IPSec GW) 21, which is part of the EPC 20. Such connection will subsequently contain all traffic done in and by the first base station 11. Thus the IPSec will be established from Pico NoteB to IP Sec Gateway (compare Fig. 1).

Subsequently, the first base station 11 may auto-connect to the Pico NodeB management, which is part of the operations and maintenance section 40, namely for network configuration purposes. For example, a cell ID of the first base station 11 may be set.

In accordance with the claimed solution, the first base station 11 determines its geographic location and the like, e.g. via a Pico NodeB management 41, to a self-configuration module 42, which are both part of the operations and maintenance section 40. The geographic location may be obtained using GPS or gathered Cell-IDs. Subsequently, the self-configuration module 42 identifies, based on the determined geographic location, a local emergency call center 50 that serves an emergency call area comprising the determined geographic location. In detail, the self-configuration module 42 may compare the determined geographic location of the Pico NodeB 11 to a map of emergency call areas. Hence, a correct emergency call center can be identified based on determined geo-information.

After that, an information on the identified local emergency call center 50 is provided to at least one network entity. For example, the self-configuration module 42 sends information consisting of "PicoNodeB-Cell-ID"/"correct local emergency call center" to entities that are relevant for emergency call routing, such as the Proxy Call Session Control Function (P-CSCF) 31 comprised in the IMS 30 and the Policy and Charging Rules Function (PCRF) 25 comprised in the EPC 20.

In case a terminal that is connected with the first base station 11, e.g. a Pico NodeB, wants to establish an emergency call, the call will reach the Packet Data Network Gateway (PGW) 24 comprised in the EPC 20 via the second base station 12, the IPSec GW 21 and the Serving Gateway (SGW) 22. After that, the PGW 24 requests a corresponding emergency call center for the first base station 11 from the PCRF 25. The PCRF 25 is provided with the necessary information by means of the P-CSCF 31, which has been supplied with this information from the self-configuration module 42. Hence, the PCRF 25 can provide the requested information. The PGW 24 routes directly to the right emergency call center, advantageously without a loop back via IPSec GW 21.

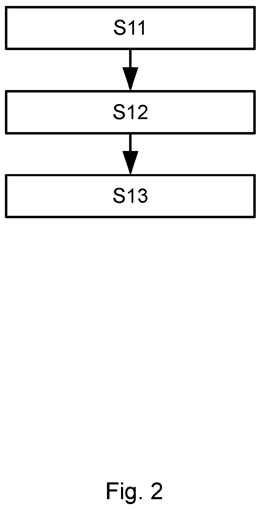

Fig. 2 shows a flow diagram representing the method according to the claimed solution.

Therein, in a first method step S11, a base station 11, particularly a Pico Node B or a Micro NodeB determines its own geographic location. The geographic location may be determined by at least one of obtaining the location of the base station 11 using a global navigation satellite system (GNSS) and obtaining the location of the base station 11 using information from cells of the wireless communication system.

For example, such GNSS may comprise at least one of GPS, GLONASS, Galileo and Beidou. Further, information from cells may comprise at least one of cell identification and timing advance.

Subsequently, in a method step S12, based on the determined geographic location, a local emergency call center 50 that serves an emergency call area comprising the determined geographic location is identified. Such identification may be performed by a self-configuration module 42 that is part of an operations and maintenance section 40 of a wireless communication system.

In method step S13 an information on the identified local emergency call center 50 to at least one network entity is provided.

After a local emergency call center 50 has been obtained, an information on the identified local emergency call center 50 is provided to at least one network entity. For example, the information may be provided directly to a Proxy Call Session Control Function (P-CSCF) 31. In case the P-CSCF 31 is requested regarding information on a local emergency call center 50, it may provide the same to a Policy and Charging Rules Function (PCRF) 25.

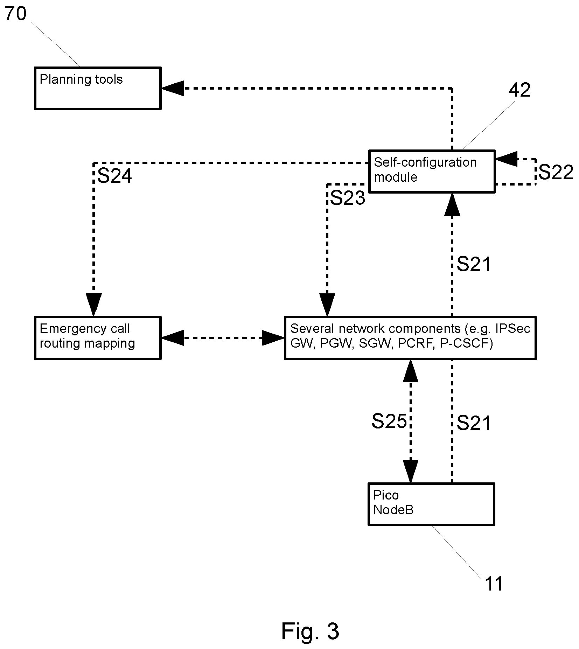

Fig. 3 represents another diagram showing the method according to the claimed solution.

According to method step S21, the first base station 11, e.g. a Pico NodeB, connects to the self-configuration module 42 and provides the same with a geographic location of the base station 11. The connection may be made via IPSec GW 21, SGW 22 and PGW 24 as already explained above with regard to Fig. 1.

The geographic location of the same may be obtained GNSS-based, cell-based by calculation considering at least three cells or cell-based by determining information of a parent cell considering one cell only.

In subsequent method step S22, the determined geographic location of the first base station 11 is compared with a map of emergency calls areas. Hence, the correct local emergency call center can be determined.

After that, a corresponding configuration relating to the identified local emergency call center is provided to several network components. In this case, a configuration of a Policy and Charging Rules Function (PCRF) 25 and a Proxy Call Session Control Function (P-CSCF) 31 might be performed.

Furthermore, according to method step S24, the identified local emergency call center 50 may be stored in a mapping table. The information stored in the mapping table may be accessed by several network components as indicated by the arrow.

Finally, in case of an emergency call the core network decides to which emergency call center the call is forwarded, i.e. the Pico NodeB does not get this destination information, but only says that there is an emergency call present, which is then forwarded correctly to establish an emergency call (already been described in more detail with regard to Fig. 1).

Since, according to Fig. 3, the self-configuration module 42 has access to planning tools 70, an automatic calculation of parameters, which are needed for network configuration, especially for emergency call routing, can be performed. For example, the location calculation is advantageously based on three cell information (so called triangulation).

The embodiments shown in the figures of the drawing and the embodiments explained in connection therewith, particularly the examples of messages in Fig. 2, serve only to explain the presented solution and are not limiting for the same.

### Reference signs:

- 10: Access Network (AN)
- 11: Base station (i.e. Pico NodeB, Micro NodeB)
- 12: Base station (i.e. Macro eNodeB)
- 20: Evolved Packet Core (EPC)
- 21: IP Sec Gateway (IPSec GW)
- 22: Serving Gateway (SGW)
- 23: Mobility Management Entity (MME)
- 24: Packet Data Network Gateway (PGW)
- 25: Policy and Charging Rules Function (PCRF)
- 30: IP Multimedia Subsystem (IMS)
- 31: Proxy Call Session Control Function (P-CSCF)
- 32: Emergency Call Session Control Function (E-CSCF)
- 33: Coordinate Reference System (CRS)
- 40: Operations & maintenance
- 41: Pico NodeB management
- 42: Self-configuration module
- 50: Emergency call center
- 60: Internet
- 70: Planning tools
- S11 to S13: Method steps
- S21 to S25: Method steps

## Claims

1. A method performed in a wireless communication system, the method comprising:
determining (S11) a geographic location of a base station (11);
identifying (S12), based on the determined geographic location, a local emergency call center (50) that serves an emergency call area comprising the determined geographic location; and
providing (S13) an information on the identified local emergency call center (50) to at least one network entity.

2. The method of claim 1, wherein the determining (S11) comprises at least one of: obtaining the location of the base station (11) using a global navigation satellite system, GNSS, and obtaining the location of the base station (11) using information from cells of the wireless communication system.

3. The method of claim 2, wherein the GNSS comprises at least one of: GPS, GLONASS, Galileo and Beidou.

4. The method of claim 2, wherein information from cells comprises at least one of: cell identification and timing advance.

5. The method of any one of claims 1 to 4, wherein the at least one network entity comprises a Policy and Charging Rules Function, PCRF (25), and a Proxy Call Session Control Function, P-CSCF (31).

6. The method of any one of claims 1 to 5, wherein the base station (11) is a Pico NodeB.

7. The method of any one of claims 1 to 6, wherein the identifying (S12) further comprises comparing the determined geographic location to a map of emergency call areas and storing the identified local emergency call center (50), preferably in a mapping table.

8. A module (42) comprising:
a transceiver configured to receive a determined geographic location of a base station (11); and
a processor operably coupled with the transceiver and configured to:
identify, based on the determined geographic location, a local emergency call center (50) that serves an emergency call area comprising the determined geographic location, and
provide an information on the identified local emergency call center (50) to at least one network entity.

9. The module (42) of claim 8, wherein the determined geographic location of the base station (11) is based on at least one of: the location of the base station (11) obtained by using a global navigation satellite system, GNSS, and the location of the base station (11) obtained by using information from cells of the wireless communication system.

10. The module (42) of claim 9, wherein the GNSS comprises at least one of: GPS, GLONASS, Galileo and Beidou.

11. The module (42) of claim 9, wherein information from cells comprises at least one of: cell identification and timing advance.

12. The module (42) of any one of claims 8 to 11, wherein the at least one network entity comprises a Policy and Charging Rules Function, PCRF (25), and a Proxy Call Session Control Function, P-CSCF (31).

13. The module (42) of any one of claims 8 to 12, wherein the base station (11) is a Pico NodeB.

14. The module (42) of any one of claims 8 to 13, wherein the processor is further configured to identify the local emergency call center (50) by comparing the received determined geographic location to a map of emergency call areas and storing the identified local emergency call center (50), preferably in a mapping table.
